# EUROPÄISCHE PATENTSCHRIFT

(11) **EP 0 903 910 B1**
(45) Veröffentlichungstag und Bekanntmachung des Hinweises auf die Patenterteilung: **02.11.2006**
(21) Anmeldenummer: 98117687.8
(22) Anmeldetag: 17.09.1998
(51) Int. Cl.: H04M 1/274, H04M 1/2745

(54) **Verfahren zur Verwaltung eines mehrstufigen Wahlwiederholungsspeichers**
Method for managing a multilevel telephone directory
Méthode d'administration d'un répertoire téléphonique à plusieurs étages

(30) Priorität: 18.09.1997 DE 19741176
(43) Veröffentlichungstag der Anmeldung: 24.03.1999
(73) Patentinhaber: SIEMENS AKTIENGESELLSCHAFT, 80333 München (DE)
(72) Erfinder: Zimmerman, Werner, 58708 Menden (DE)

(56) Entgegenhaltungen:
- EP-A- 0 463 582
- EP-A- 0 540 928
- DE-A- 4 423 789

## Beschreibung

Für zeitgemäße Kommunikationssysteme sind viele unterschiedliche Leistungsmerkmale bekannt, die einerseits den Bedienungskomfort steigern und andererseits über die Grundfunktionen der Vermittlung hinausgehende Verbindungsmöglichkeiten bieten. Neben den Zifferntasten weisen die angeschlossenen Endgeräte zusätzliche Funktionstasten auf, denen durch entsprechende betriebstechnische Anweisungen unterschiedliche Funktionen zugeordnet werden können. So können die Endgeräte beispielsweise mit einer Wahlwiederholungsfunktion ausgestattet werden. In einem Wahlwiederholungsspeicher wird zumindest die letzte manuell eingegebene oder mit Hilfe von Zielwahltasten oder elektronischen Wahlhilfen ausgewählte Rufnummer hinterlegt. Ist das Ziel nicht erreichbar oder wird der Rufwunsch aus bestimmten Gründen zurückgestellt, dann kann diese eingespeicherte Rufnummer zu einem späteren Zeitpunkt, zum Beispiel durch Betätigung der Wahlwiederholungstaste, abgerufen werden. Weist das Endgerät eine Anzeigevorrichtung auf, so ist diese Rufnummer gleichzeitig mit der vorgenommenen Auswahl dem Teilnehmer anzeigbar. Mit einer weiteren eingegebenen Rufnummerninformation wird die ursprünglich im Wahlwiederholungsspeicher vorhandene überschrieben. Bei einem einstufigen Speicher ist sie also verloren, falls sie nicht unter eine Zielwahltaste oder in einer elektronischen Wahlhilfe abgelegt ist. Abhilfe bietet ein für sich bekannter erweiterter Wahlwiederholungsspeicher, der mehrere Stufen aufweist. Bei Erstbetätigung, zum Beispiel der Wahlwiederholungstaste wird die älteste vom Teilnehmer eingewählte Rufnummer angezeigt und als Wahlinformation dann ausgegeben, wenn keine erneute Betätigung der Wahlwiederholungstaste erfolgt. Ist dies der Fall, so kann durch jedes erneute Betätigen jede der anderen im Speicher enthaltenen Rufnummern nacheinander selektiert werden. Die tatsächliche Auswahl einer selektierten Rufnummer erfolgt erst nach Ablauf einer bestimmten Selektionszeit. Diese Auswahl ist also ohne eine weitere manuelle Eingabe möglich.

Die Erfindung betrifft ein Verfahren zur Verwaltung des Inhaltes eines mehrstufigen Wahlwiederholungsspeichers. In diesen sind jeweils Wahlinformationen, die an einem an ein programmgesteuertes Kommunikationssystem angeschlossenen Endgerät erzeugt werden, einspeicherbar. Die Inhalte der einzelnen Speicherplätze sind durch nachfolgend eingegebene Wahlinformationen bei vollständiger Belegung des Wahlwiederholungsspeichers ersetzbar. Nach einer wahlwiederholungsrelevanten Eingabeprozedur, die beispielsweise als Betätigung einer entsprechenden Wahlwiederholungstaste erfolgt, ist der Inhalt des betreffenden Speicherplatzes jeweils in der bestimmungsgemäß vorgegebenen Reihenfolge an der Anzeigeeinrichtung des Endgerätes anzeigbar. Nach Ablauf einer vorbestimmten Selektionszeit wird die den jeweiligen Inhalt repräsentierende Wahlinformation automatisch ausgegeben.

Ein derartiges Verfahren ist beispielsweise aus der europäischen Offenlegungsschrift EP 0 463 582 A2 bekannt, wobei bei dem beschriebenen Verfahren die Wahlinformation nicht nach Ablauf einer vorbestimmten Selektionszeit automatisch ausgegen wird, sondern eine explizite Benutzereingabe zur Ausgabe der Wahlinformation notwendig ist.

Es ist die Aufgabe der Erfindung, einen flexibleren Einsatz des Leistungsmerkmals "mehrstufige Wahlwiederholung" zu ermöglichen und die Funktionalität zu verbessern. Dies wird dadurch erreicht, dass durch programmtechnische Festlegungen auf Grund bestimmter Eingabeprozeduren eine gezielte Einflussnahme auf die bereits im Wahlwiederholungsspeicher gespeicherten bzw. abhängig von den bereits im Wahlwiederholungsspeicher gespeicherten Wahlinformationen durchgeführt wird. Diese erfindungsgemäß vorgesehene Einflussnahme kann zum Beispiel in der Aktualisierung der Anzeigefolge, in Ergänzungen, Korrekturen, Vervollständigen und im Überschreiben der eingespeicherten Wahlinformationen bestehen. Eine weitere Möglichkeit dieser Einflussnahme besteht in der Abwehr redundanter Wahlinformationen bzw. in der Abwehr von unvollständigen Wahlinformationen. Grundsätzlich kann die bestimmungsgemäß vorgegebene Reihenfolge entweder nach dem Prinzip eines indexgeführten Speichers oder eines chronologisch geführten Speichers definiert sein. Die Anzahl der Speicherstufen, in denen jeweils eine vom Teilnehmer eingewählte Wahlinformation eingespeichert wird, kann grundsätzlich eine beliebige Anzahl umfassen. Sie wird jedoch sinnvollerweise so bestimmt, dass die Übersichtlichkeit gewährleistet ist. Bei jeder Betätigung der Wahlwiederholungstaste kann die jeweils angezeigte Wahlinformation entsprechend einem Einspeichermechanismus zyklisch aus dem Wahlwiederholungsspeicher ausgelesen und nach Ablauf der genannten Selektionszeit automatisch ausgegeben werden.

Eine vorteilhafte Ausgestaltung der Erfindung besteht darin, dass in den Fällen, in denen ein angezeigter Inhalt eines Speicherplatzes als Wahlinformation ausgegeben wurde, dieser Inhalt bei einer nachfolgenden wahlwiederholungsrelevanten Eingabeprozedur (Betätigung der Wahlwiederholungstaste) als erste Information angezeigt wird. Bei jeder unmittelbar nachfolgenden wahlwiederholungsrelevanten Eingabeprozedur werden die Inhalte der weiteren Speicherplätze jeweils in ihrer bestimmungsgemäß vorgegebenen Reihenfolge angezeigt. In Aktualisierung der Chronologie wird erfindungsgemäß die selektierte und ausgewählte Rufnummerninformation in den mit dem jüngsten Eintrag zu beschreibenden Speicherplatz umgespeichert, wobei die in den dazwischenliegenden Speicherplätzen enthaltenen Rufnummerninformationen in Richtung des freiwerdenden Speicherplatzes jeweils um einen Speicherplatz verschoben werden. Es ist also nicht der Eingabezeitpunkt, sondern der Zeitpunkt der aussendenden Wahlinformation für die Einordnung der Wahlinformation in den Wahlwiederholungsspeicher maßgebend. Es erfolgt erfindungsgemäß eine chronologische Verwaltung von Wahlinformationen anhand des Zeitpunktes der Wahlaussendung mit Aktualisierung der Chronologie bei erneuter Auswahl einer Rufnummer. Es findet demnach erfindungsgemäß eine Bewertung nach einer Bedeutung der Wahlinformation statt, die dadurch entsteht, dass eine Rufnummer wiederholt selektiert und ausgesendet wird. Bei Erstbetätigung der Wahlwiederholungstaste wird jeweils die zuletzt ausgesendete Wahlinformation zuerst auf der Anzeiegeeinrichtung angezeigt und zur Wiederwahl angeboten. Daraus ergeben sich wesentliche Vorteile im Hinblick auf die Benutzungsfreundlichkeit. Es besteht erfindungsgemäß die Möglichkeit, eine aktuell angezeigte Wahlinformation durch eine während der Selektionszeit begonnene Einwahl einer Ziffernfolge zu ersetzen, wobei dann die Selektionszeit abgebrochen wird. Dadurch ergibt sich gleichzeitig die Möglichkeit, eine Wahlinformation im Wahlwiederholungsspeicher durch Eingabe einer willkürlichen Nummer zu überschreiben, um die ursprünglich darin enthaltene Rufnummer vor Missbrauch zu schützen. Die erfindungsgemäße Prozedurführung bietet die Möglichkeit, eine im Wahlwiederholungsspeicher enthaltene Rufnummer vor einem Überschreiben durch eine andere Wahlinformation solange geschützt zu halten, bis die Eingabe einer diese Maßnahme aufhebenden Prozedursteuerinformation erfolgt. Es wird erfindungsgemäß auch das Ketten von nachgewählten Ziffern an eine beliebige aus dem Wahlwiederholungsspeicher selektierten Wahlinformation ermöglicht. Auf diese Weise steht dann anschließend die um die Nachwahl ergänzte vollständige Wahlinformation im Wahlwiederholungsspeicher in einfacher Weise zur Verfügung.

Erfindungsgemäß kann der mehrstufige Wahlwiederholungsspeeicher entweder in einem Endgerät selbst oder im Systemspeicher des Kommunikationssystems, auf den die Systemsteuerung zugreift, realisiert sein. In den Fällen, in denen das Endgerät an ein Kommunikationssystem angeschlossen ist, das eine Menüführuung bietet, sind erfindungsgemäß entsprechend der jeweils angezeigten Option durch Tastenbetätigung im Zusammenhang mit einer wahlwiederholungsrelevanten Eingabeinformation unterschiedliche und an der Anzeigeeinrichtung anzeigbare leistungsmerkmalspezifische Prozeduren einleitbar. Es werden also in vorteilhafter Weise Leistungsmerkmale mit der Wahlwiederholungstaste verknüpft. In diesem Zusammenhang ist bei einer aus dem Speicher angezeigten Wahlinformation der Ablauf der daran geknüpften Selektionszeit durch die Betätigung einer Funktionstaste zu stoppen. Anschließend sind dann verschiedene Menüpunkte anzeigbar, von denen einer durch den Teilnehmer bestätigt werden kann. Bei dem erfindungsgemäßen Verfahren wird die Abwehr von redundanten Wahlinformationen ermöglicht. Das bedeutet, dass eine bereits im Wahlwiederholungsspeicher vorhandene Wahlinformation nicht erneut gespeichert wird. In den Fällen, in denen erkannt wird, dass eine eingegebene Wahlinformation bereits Teil einer schon gespeicherten Wahlinformation ist, wird diese neue Wahlinformation nicht gespeichert. Es wird erfindungsgemäß automatisch eine gespeicherte unvollständige Wahlinformation bei Neueingabe der vollständigen Wahlinformation substituiert.

Weitere vorteilhafte Ausgestaltungen sind den restlichen Unteransprüchen zu entnehmen.

Die Erfindung wird im folgenden anhand eines figürlich dargestellten Ausführungsbeispiels erläutert.

Die Figur 1 zeigt in schematischer Darstellung die Struktur eines Kommunikationssystems, bei dem ein Wahlwiederholungsspeicher realisiert ist.

In der Figur 2 sind in schematischer Darstellung Speicherbelegungen im Zusammenhang mit der Ein- bzw. Um- oder Ausspeicherung von Wahlinformationen gezeigt.

Zentraler Bestandteil des Kommunikationssystems KS, das z.B. ein sog. Nebenstellenkommunikationssystem darstellt, ist ein zentrales Koppelfeld KF, über das Endgeräte - von denen die Fernsprechendgeräte FE1 und FEx schematisch angedeutet sind - miteinander bzw. mit zu einer öffentlichen Vermittlungsanlage ÖN führenden Leitungen AL verbindbar sind. Das zentrale Koppelfeld KF steht unter dem Steuereinfluß einer zentralen Systemsteuerung ST, die neben dem Zentralprozessor CPU eine Speichereinrichtung SPE und eine Takteinheit TG enthält. Der zentrale Prozessor steuert sämtliche Vermittlungsvorgänge und besorgt eine Aufbereitung und Zuteilung der Steuerdaten. Diese Aufgaben können auch auf mehrere Prozessoren aufgeteilt werden. Im Kommunikationssystem KS sind Leitungsanschlußeinrichtungen, symbolisiert durch die Leitungsanschlußeinrichtung LT angeordnet. Die Teilnehmerendgeräte sind jeweils über eine Anschlussleitung ASL mit ihr verbunden. Ein Beispiel hierfür sei das Fernsprechendgerät FE1. Auf der Anschlussleitung ASL erfolgt die Nachrichtenübertragung z.B. über einen Nachrichtenkanal N und die Signalisierung wird über einen zusätzlichen Signalisierungskanal S übermittelt.

Wie für das Fernsprechendgerät FE1 angedeutet ist, weist dieses Endgerät für die Eingabe von Signalisierungs- und Wahlinformationen ein Tastenfeld TF auf. Dieses Tastenfeld TF enthält die nicht im einzelnen dargestellten numerischen Tasten WT für die Eingabe von Wahlinformationen und Funktionstasten FT für die Eingabe von Zusatzfunktionen. Durch die Betätigung der vorhandenen Funktionstasten können jeweils bestimmte Funktionsabläufe aktiviert werden. Hierzu gehören z.B. mittels des Anlagenbetriebsprogramms realisierbare Leistungsmerkmale. Solchen Funktionstasten können bestimmte Funktionen fest zugeordnet sein oder alternativ hierzu frei zugeordnet werden. Als Beispiel für derartige Funktionstasten sind eine Wahlwiederholungstaste WWT, eine Servicetaste STA, eine Namenstaste NT und die im Zusammenhang mit einer Menüführung vorhandene Bestätigungstaste OK und eine sogenannte "Weiter-Taste" NEXT symbolisch dargestellt. Die einzelnen Tasten des Tastenfeldes TF sind mit einer in jeder Endeinrichtung zur Steuerung ihrer Funktionen vorhandenen und z.B. durch einen Prozessor realisierten Steuereinheit PE gekoppelt. Mit dieser Steuereinheit PE sind ferner die Einheiten IR, UD, Se und DL verbunden. Die Einheit IR erkennt die Betätigung einzelner Tasten, bildet entsprechende Signalisierungsinformationen und gibt diese über den Signalisierungskanal S der Anschlußleitung ASL an das Vermittlungssystem oder auch an die dem Endgerät zugeordnete Anzeigeeinrichtung DL weiter. Diese Anzeigeeinrichtung ist beispielsweise durch ein- oder mehrzeiliges LCD-Display realisiert. Diese Anzeigeeinrichtung ist allgemein für die Anzeige von Ziffern, Text- und Wahlinformationen vorgesehen.

Die Einheit UD registriert diejenigen Informationen, die dem Teilnehmerendgerät über den Signalisierungskanal vom Vermittlungssystem KS zur weiteren Verarbeitung zugeführt werden. Die Einheit Se ist als Speicher ausgebildet und dient beispielsweise der Aufnahme eines Betriebsprogrammes für die Steuereinheit PE und für die Aufnahme von zwischenzuspeichernden Daten. Mit der Einheit HA/SP ist die Sprechschaltung symbolisch angedeutet. Sie dient im Zusammenhang mit dem Hör- bzw. Sprechorgan, beispielsweise durch einen Handapparat HA realisiert, der Verarbeitung der übertragenen Sprachinformationen und meldet einen Leitungsschluß.

Die z.B. vom Kommunikationsendgerät FE1 übermittelten digitalen Sprachinformationen werden zum Koppelfeld KF weitergegeben. Vermittlungstechnisch gesteuert werden die Leitungsanschlußeinrichtungen LT von der Systemsteuerung ST. Hierbei ist jede Leitungsanschluß-Einrichtung über einen Signalisierungskanal SK mit der Systemsteuerung ST verbunden. Über diesen Signalisierungskanal SK werden die Informationen, zum Beispiel mit Hilfe der bekannten HDLC-Übermittlungsprozedur ausgetauscht. Die in der zentralen Systemsteuerung gebildeten Taktsignale werden über eine Taktleitung TL an die Leitungsanschluß-Einrichtungen LT verteilt. Das zur Verfügungstellen der Taktsignale wird durch die Einheit TG symbolisiert.

Der Zugriff zu einer Amtsleitung AL über die, - ggf. als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Der zentrale Prozessor CPU der zentralen Systemsteuerung ST hat Zugriff zu den in der Speichereinrichtung SPE abgelegten Daten. Sie besteht grundsätzlich aus den Speicherteilen PROM und RAM. In dem Programmspeicherteil PROM ist das Anlagenbetriebsprogramm und die zu ihm bezüglich der Peripherietechnik, der Betriebstechnik der Sicherheitstechnik und der Vermittlungstechnik gehörenden Programme abgespeichert. Dies ist bezüglich der Vermittlungstechnik durch das Modul VT angedeutet. Mit LM ist ein Modul bezeichnet, das symbolisch für die zur Realisierung der einzelnen Leistungsmerkmale vorhandenen Programm-Module steht. Durch die Programmkomponente BOF wird die sog. Benutzeroberfläche gesteuert.

In dem Speicherteil RAM ist als Teileinheit der Datenbasis DB der Speicherbereich KD angedeutet. In diesem sind die Kundendaten, wie z.B. die den einzelnen Endgeräten FE zugeteilten Berechtigungen und die Anlagenkonfiguration abgelegt. Der Speicherteil RAM dient u.a. der Aufnahme von temporären Daten zur Programmablaufsteuerung. Es werden in ihm auch Daten übernommen, die während eines durch ein Kommunikationsendgerät FE initiierten Verbindungsaufbaus oder bei der Inanspruchnahme eines Dienstes bzw. Leistungsmerkmals abgefragt werden. Jedem Endgerät FE...FEx ist ein Speicherbereich A1...Am zugeteilt, in dem die endgerätebezogenen Daten abgelegt sind. Es ist also daraus beispielsweise der aktuelle vermittlungstechnische Zustand, d.h. also die Information, ob der betreffende Teilnehmer den Handapparat abgehoben hat, oder er gerufen wird usw. als Speicherinformation entnehmbar. In einem solchen Arbeitsspeicherbereich A1...Am, der als dynamische Datenbasis für die einzelnen Endgeräte FE anzusehen ist, sind beispielsweise bezüglich der möglichen Leistungsmerkmale bzw. Dienste die einzelnen Zustände in vorbestimmten Speicherbereichen abgespeichert.

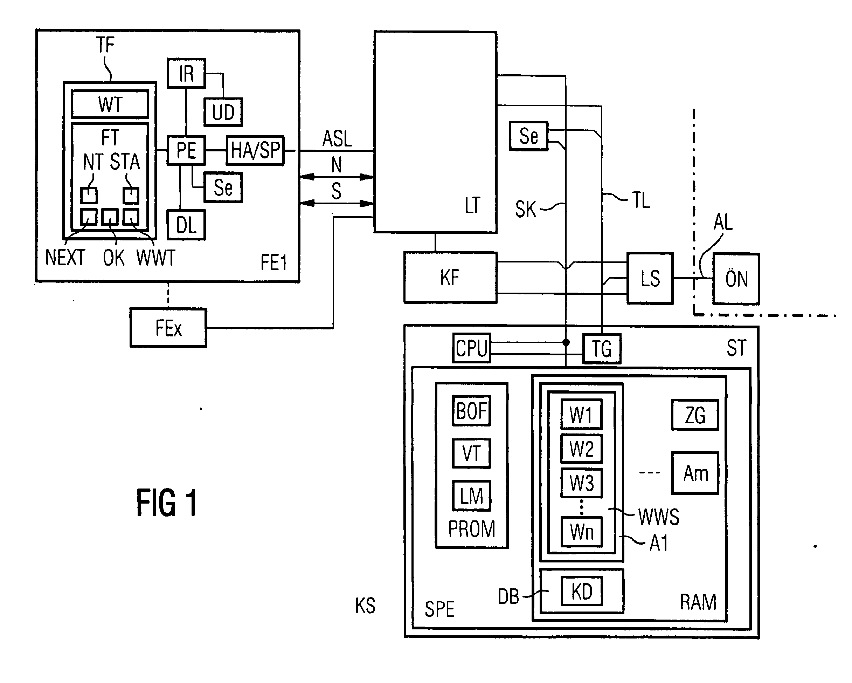

Für das Kommunikationssystem KS ist ein mehrstufiger Speicher zur Wahlwiederholung vorgesehen. Dieser kann zum Beispiel jeder Teilnehmerlage des Kommunikationssystems innerhalb der Software zugeordnet sein. In der Figur 1 ist dies dadurch veranschaulicht, dass in einem endgeräteindividuellen Speicherbereich A1 bis Am der durch die Systemsteuerung verwaltete Wahlspeicher WWS angedeutet ist. Im Speicherbereich A1 ist der mehrstufige Wahlwiederholungsspeicher durch die Speicherstufen W1 bis Wn dargestellt. Die Anzahl dieser Speicherstufen ist grundsätzlich beliebig. Um die Übersichtlichkeit zu gewährleisten und die Flexibilität zu sichern, sollte die Anzahl n dieser Speicherstufen eher geringer gewählt werden. Er kann als Ringspeicher realisiert sein, wobei ein "Zeiger" immer auf die bei der Betätigung der Wahlwiederholungstaste WWT anzuzeigende Speicherstufe verweist. Der Schreibzugriff auf den mehrstufigen Wahlwiederholungsspeicher WWS erfolgt in der Weise, dass unabhängig von der Zeigerposition zunächst freie Speicherebenen, wie beispielsweise unmittelbar nach der ersten Einschaltung, beschrieben werden. Es lassen sich grundsätzlich zwei Mechanismen der Verwaltung des Wahlwiederholungsspeichers unterscheiden. Zum Einen der indexgeführte Speicher, bei dem die Reihenfolge der Wahlinformationen bei Abfrage des Wahlwiederholungsspeichers durch wiederholten Tastendruck dem Benutzer willkürlich erscheinen kann. Dies ist der Fall, wenn die Schrittrichtung des Zeigers, der die Speicherstufe adressiert, bei starrer unchronologischer Speicherebenenverwaltung im Falle der Neueingabe einer Wahlinformation und beim Betätigen der Wahlwiederholungstaste fest ist. Dies kann im positiven und im negativen Sinne erfolgen. Zum Anderen der chronologisch geführte Speicher, bei dem im Allgemeinen durch ein Umspeichern der Wahlinformation und Mitführen eines Datums sichergestellt wird, dass die Chronologie der an der Anzeigeeinrichtung DL des Endgerätes angezeigten Wahlinformationen bei wiederholter Betätigung der Wahlwiederholungstaste WWT gewährleistet ist. Der Zeiger weist zu Beginn der Prozedur immer auf die zuletzt ausgewählte Rufnummer und diese Rufnummer ist der Inhalt der für den jüngsten Eintrag vorgesehenen Speicherstufe. Bei Erstbetätigung der Wahlwiederholungstaste wird also immer die zuletzt ausgewählte Wahlinformation an der Anzeigeeinrichtung DL des Endgerätes angezeigt und der Zeiger adressiert die zugehörige Speicherstufe. Dadurch sind oft benötigte Rufnummern sehr schnell abrufbereit. Eine Rufnummer, die einen älteren Zeitrang aufweist, also sehr früh eingegeben wurde, und oft innerhalb der mehrstufigen Wahlwiederholung selektiert und ausgewählt wird, wird nicht überschrieben zu Lasten einer Rufnummer, die einen zeitrangjüngeren Speicherplatz einnimmt - das heisst also später eingegeben wurde - aber nicht erneut ausgewählt wurde. Im Falle eines dreistufigen Wahlwiederholungsspeichers könnte dies einfach dadurch realisiert werden, dass die Schrittrichtung des Zeigers invertiert wird, wenn die Wahlwiederholungstaste WWT eine gradzahlige Anzahl mal betätigt wird, um eine Speicherstufe bzw. die dazugehörige Rufnummerninformation zu selektieren. Die Invertierung erfolgt im Augenblick der Aussendung der Wahlinformation oder bei der Neueingabe einer Wahlinformation innerhalb der vorgesehenen Selektionszeit. Bei mehr als drei Speicherstufen ist ein Aktualisieren der Chronologie des Eintrages und Umspeichern in die zeitrangjüngste, das heisst, aktuellste Speicherstufe notwendig, wobei der Inhalt der zeitrangältesten Speicherstufe verlorengeht. Bei der erfindungsgemäßen Prozedurführung wird also nicht der Eingabezeitpunkt, sondern der Zeitpunkt der Aussendung der Wahlinformation für die chronologische Einordnung einer Wahlinformation in eine Speicherstufe ausgewertet.

Die erfindungsgemäße Prozedurführung sieht vor, dass eine Wahlinformation, die über die Tastatur, aus dem Kurzwahlspeicher oder durch anders geartete Wahlhilfen eingegeben wird und bereits im mehrstufigen Wahlwiederholungsspeicher vorhanden ist, dort nicht erneut abgelegt wird. Die Speicherstufe, in der die eingegebene Rufnummer bereits eingetragen ist, wird dann aber zur aktuell adressierten Speicherstufe. Weiterhin ist erfindungsgemäß vorgesehen, dass innerhalb eines Kommunikationssystems, bei dem zwischen verschiedenen externen Leitungen oder Richtungen differenziert wird, die Art der externen Belegung aktualisiert wird. Wird also zunächst eine Rufnummer mit einer gezielten Belegung einer Leitung x gewählt, dann die gleiche Rufnummer mit gezielter Belegung der Leitung y, so wird ausschließlich die gezielte Belegung der Leitung y gespeichert.

Eine erneute Betätigung der Wahlwiederholungstaste unmittelbar nach Ablauf der vorgesehenen Selektionszeit führt entweder zu einer endgeräte- bzw. systemspezifischen Fehlerbehandlung oder zu einer sinnvollen Weiterverarbeitung der Benutzereingabe. Auf diese Weise ist der Aufbau einer Verbindung im Sinne einer Rückfrage zu einem externen Teilnehmer mit Hilfe einer weiteren im Wahlwiederholungsspeicher abgelegten Information möglich. Voraussetzung dafür ist, dass für eine derartige "Schnellvermittlung" zwei Verbindungen durchführbar sind, wie dies bei einem ISDN-System der Fall ist. Sinnvoll ist die Möglichkeit insbesondere bei einer Verbindungspaarung einer intern und einer externen Verbindung.

Bei einer Neueingabe von Wählziffern während der Selektionszeit bricht der Selektionsvorgang ab. Die so eingegebene Wahlinformation überschreibt die unmittelbar vorher aus der aktuellen Wahlwiederholungsspeicherstufe angezeigte Rufnummer und ist somit auf Grund dieses implementierten Überschreibmechanismus in Zukunft durch die Betätigung der Wahlwiederholungstaste abrufbar. Damit besteht auch die Möglichkeit, Rufnummern vor unberechtigtem Zugriff zu schützen, indem sie mit belangloser Wahlinformation gezielt überschrieben werden. Die Eingabe einer Wahlinformation nach Ablauf der Selektionszeit bewirkt eine Nachwahl, die gleichzeitig auch in der aktuellen Wahlwiederholungsspeicherstufe an die darin vorhandene Wahlinformation gekettet wird. Bei einer erneuten Auswahl steht sie somit zsätzlicih zur Verfügung. Grundsätzlich wird die Selektionszeit so festgelegt, dass einerseits die an der Anzeigeeinrichtung dargestellte Wahlinformation durch den Teilnehmer sicher optisch erfassbar ist und andererseits die verzögerte Auswahl die gewohnten Abläufe nicht negativ beeinflussen.

Erfindungsgemäß kann durch eine bestimmte Prozedur sichergestellt werden, dass eine bereits im Wahlwiederholungsspeicher enthaltene Wahlinformation resistent gespeichert bleibt. Sie wird also so lange nicht durch eine andere Wahlinformation überschrieben, bis eine entsprechende Änderungseingabe erfolgt.

Innerhalb eines menügeführten Kommunikationssystems bietet sich auch die Möglichkeit, Leistungsmerkmale mit der Wahlwiederholungstaste zu verknüpfen. Nach der Erstbetätigung dieser Wahlwiederholungstaste WWT wird die aktuell adressierte Wahlinformation auf der Anzeigeeinrichtung DL dargestellt. Gleichzeitig könnte als Fragestellung "nächste Rufnummerninformation?" für die Dauer der Selektionszeit dargestellt werden. Wird die Wahlwiederholungstaste oder auch die üblicherweise vorhandene Bestätigungstaste OK erneut betätigt, so wird die nächste Wahlinformation nach einem der erwähnten Prinzipien auf der Anzeigeeinrichtung angezeigt. Nach Ablauf der Selektionszeit entfällt die Anzeige des Menüangebots und die Wahlinformation wird ausgewählt.

Innerhalb der Selektionszeit können im Zusammenhang mit der Menüführung bestimmte Prozeduren veranlasst werden. Beispielsweise unterbricht eine Betätigung der Folgetaste NEXT die Selektionszeit. Der Benutzer hat dann die Möglichkeit unter verschiedenen, ihm angezeigten Menüpunkten zu wählen. Diese sind in einer entsprechenden Menütabelle enthalten und werden ihm angezeigt. Es ist beispielweise denkbar, eine eingegebene Wahlinformation in der entsprechenden Stufe des Wahlwiederholungsspeichers löschresisten abzulegen. Wird beispielsweise bei der Anzeige "Rufnummer schützen?" bzw. "Rufnummer freigeben?" die Bestätigungstaste Ok betätigt, so wird durch Aktivierung der entsprechenden Programmsteuerung die gerade an der Anzeigeeinrichtung DL angezeigte Wahlinformation vor willkürlichem Überschreiben geschützt bzw. der Schutz wird aufgehoben. Weitere Menüpunkte können beispielsweise die Anzeige "Rufnummer übernehmen?", "Rufnummer als Kurzwahlziel übernehmen?" betreffen. Es erfolgt bei der Bestätigung dann die Übernahme der betreffenden Wahlinformation unter einer Direktwahltaste oder in den Kurzwahlzielspeicher. Es kann auch programmtechnisch festgelegt werden, dass zum Beispiel die Anzeige "nächste Rufnummer?" erfolgt, ohne dass die Selektionszeit erneut gestartet wird. Bei Bestätigung der Anzeige beispielsweise "Rufnummer auswählen?" wird die betreffende Wahlinformation ausgegeben und bei der Bestätigung der Anzeige "beenden?" erfolgt das Verlassen der Prozedur im Sinne eines Trennens.

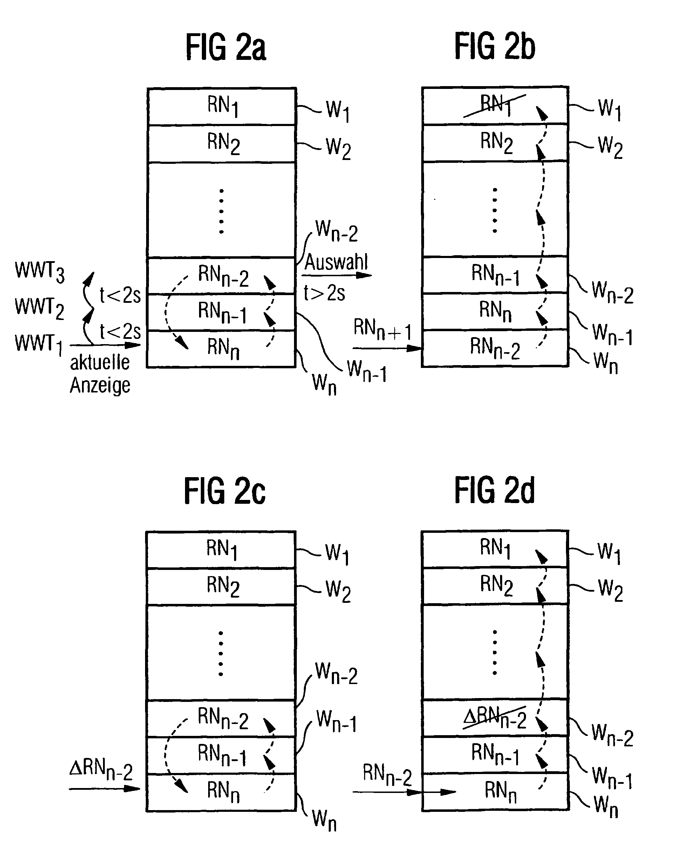

Einige Prinzipien der Prozedurführung bei einem Mehrstufenwahlwiederholungsspeicher sind in der Figur 2 schematisch dargestellt. Wie in den Figuren 2a bis 2d gezeigt, soll der Wahlwiederholungsspeicher WWS die Speicherstufen W1 bis Wn aufweisen. Es wird davon ausgegangen, dass alle Speicherstufen Rufnummern beinhalten. Die zeitrangälteste Rufnummer soll die Rufnummer RN₁ und die zeitrangjünste Rufnummer RNₙ sein.

In der Figur 2a ist die Mehrfachbetätigung der Wahlwiederholungstaste WWT und die automatische Auswahl nach der Selektionszeit veranschaulicht. In dem Beispiel soll die Selektionszeit t zwei Sekunden betragen. Es wird angenommen, dass der Teilnehmer durch dreimalige Betätigung der Wahlwiederholungstaste ohne Überschreiten der Selektionszeit den Speicherplatz Wₙ₋₂ adressiert hat. Der Inhalt des Speicherplatzes, also die darin abgespeicherte Rufnummer RN ₙ₋₂ wird nach Ablauf der Selektionszeit als Wahlinformation ausgewählt. Auf Grund dieser Auswahl findet nun eine Aktualisierung der Chronologie der selektierten Rufnummerninformation statt. Das bedeutet, dass diese Rufnummer RNₙ₋₂ in den zeitrangjüngsten Speicherplatz Wₙ umgespeichert wird, und dass die zeitrangmä-ßig dahinterliegenden Speicherinhalte RNₙ₋₁ und RNn um jeweils einen Speicherplatz in Richtung zeitrangälterer Einträge verschoben werden. Diese Tatsache der Umspeicherung und der Verschiebung ist durch die gestrichelten Pfeile angedeutet. Die ausgewählte Rufnummer RNₙ₋₂ ist somit auf den Speicherplatz Wn für den zeitrangjüngsten Eintrag gerückt. Das bedeutet, dass diese Rufnummer bei einer nachfolgenden Betätigung der Wahlwiederholungstaste als erste angezeigt und zur Wiederwahl angeboten wird. Es wird also in vorteilhafter Weise der Zeitpunkt der Wahlaussendung für die Verwaltung einer Wahlinformation zugrundegelegt. Eine Rufnummer, die häufig innerhalb dieser mehrstufigen Wahlwiederholung selektiert und ausgewählt wird, bleibt im Speicher erhalten. Die nach der Auswahl der Rufnummer gemäß Figur 2a vorhandene Speicherbelegung ist in der Figur 2b veranschaulicht. Es bleibt also im Sinne eines chronologisch geführten Speichers die Chronologie in der Auswahl erhalten. Oft wiederholte Rufnummern werden in der zeitrangjüngsten Speicherstufe wieder eingekettet und nicht am unteren Ende des Speichers herausgeschoben. In der Figur 2b ist der Fall der Neueintragung einer vom Teilnehmer gewählten Rufnummer in den Wahlwiederholungsspeicher veranschaulicht. Diese Rufnummer Rnₙ₊₁ wird in die zeitrangjüngste Speicherstelle Wn eingetragen. Die im Speicher enthaltenen Rufnummern werden jeweils um einen Speicherplatz in Richtung zeitrangälterer Einträge verschoben. Dies ist durch die gestrichelten Pfeile angedeutet. Der zeitrangälteste Eintrag, nämlich die Rufnummer RN1 wird gelöscht.

Im Zusammenhang mit der Einspeicherung einer von einem Teilnehmer gewählten Rufnummer in den Wahlwiederholungsspeicher wird geprüft, ob diese Rufnummerninformation bereits im Speicher enthalten ist. Dies betrifft nicht nur eine Prüfung auf die Vollständigkeit dieser Rufnummer, sondern auch, ob die neu gewählte Rufnummer ein Fragment einer bereits im Speicher enthaltenen Rufnummer darstellt. Wird dies bei der Vergleichsprüfung erkannt, so wird die neu eingegebene Wahlinformation als ungültig interpretiert, das heisst, es erfolgt eine Abwehr von unvollständigen Wahlinformationen. Diese neu eingegebene Wahlinformation wird nicht in den mehrstufigen Wahlwiederholungsspeicher aufgenommen. Die Speicherstufe, die die zum eingegebenen Fragment passende vollständige (-re) Rufnummerninformation enthält, wird zur aktuell adressierten Speicherstufe. Im Ausführungsbeispiel gemäß Fig. 2c soll die eingegebene Wahlinformation ΔRₙ₋₂ ein Fragment der im Speicher enthaltenen Rufnummer RNₙ₋₂ darstellen. Diese Rufnummer wird somit entsprechend der bereits beschriebenen Aktualisierung der Chronologie in den zeitrangjünsten Speicherplatz Wn eingespeichert, und es erfolgt eine Verschiebung der dahinterliegenden Einträge. Bei einer nachfolgenden Betätigung der Wahlwiederholungstaste wird dann diese Rufnummer RNₙ₋₂ in der Anzeigeeinrichtung des betreffenden Endgerätes angezeigt. Bei einem indexgeführten Wahlwiederholungsspeicher würde sich das Verfahren in der Weise unterscheiden, dass der Zeiger, der auf die anzuzeigende Speicherstufe zeigt, auf diejenige Stufe springt, die die vollständige (-re) Rufnummer enthält.

Die geschilderte Prozedur gemäß Figur 2c ermöglicht auch die schnelle Suche einer bestimmten Rufnummerninformation innerhalb des Wahlwiederholungsspeichers. Wird nämliche ein eindeutig zuordenbares Rufnummernfragment über die Eingabetastatur des jeweiligen Endgerätes eingegeben und die Wahl abgebrochen, dann wird durch anschließendes Betätigen der Wahlwiederholungstaste sofort die vollständige Rufnummerninformation an die Anzeigeeinrichtung des Endgerätes angezeigt und diese Rufnummer nach Ablauf der Selektionszeit ausgewählt.

Die Figur 2d veranschaulicht den Fall, dass die abgespeicherte Rufnummer ΔRNₙ₋₂ bei der Überprüfung als Fragment der vom Teilnehmer eingegebenen Rufnummer RNₙ₋₂ erkannt wird. Diese Vergleichsprüfung wird zum Beispiel bei Wahlabbruch durch Trennen oder Auflegen des Handapparates durchgeführt. Daraufhin wird das Fragment ΔRNₙ₋₂ gelöscht und die in den zeitrangjüngeren Speicherplätzen dahinterliegenden Rufnummern RNₙ₋₂ und RNn umgespeichert, das heisst, jeweils um einen Speicherplatz verschoben. Die vollständige (-re) Rufnummer RNₙ₋₂ wird an den zeitrangjüngsten Speicherplatz des Wahlwiederholungsspeichers eingespeichert. Sie wird beim nachfolgenden erstmaligen Betätigen der Wahlwiederholungstaste WWT zur Anzeige gebracht. In gleicher Weise wird verfahren, wenn bei Vergleichsprüfung festgestellt wird, dass die neu eingegebene Rufnummer bereits im Wahlwiederholungsspeicher enthalten ist. Das Verfahren beim indexgeführten Wahlwiederholungsspeicher ist ähnlich dem der Figur von 2d zugrundegelegten chronologisch geführten Verfahren. Der Unterschied besteht darin, dass der Zeiger auf die Speicherstufe springt, in der das Fragment erkannt wurde. Das Fragment wird durch die vollständige (re) Rufnummer ersetzt.

Durch den Vergleich einer neu eingegebene Wahlinformation mit den im Wahlwiederholungsspeicher abgelegten Wahlinformationen (Rufnummern) nach dem gemäß der Figur 2c und 2d beschriebenen Prinzip wird sichergestellt, dass möglichst nur vollständige und sinnvolle Wahlinformationen innerhalb des mehrstufigen Wahlwiederholungsspeichers gespeichert sind. Dadurch lässt sich die notwendige Anzahl der Speicherebenen bei gleichzeitiger Sicherstellung des Nutzens für den Benutzer reduzieren.

Im Ausführungsbeispiel gemäß der Figur 1 ist der mehrstufige Wahlwiederholungsspeicher im Systemspeicher des Kommunikationssystems KS angeordnet. Es ist, wie bereits erwähnt auch möglich, diesen Wahlwiederholungsspeicher in den Endgeräten vorzusehen.

## Patentansprüche

1. Verfahren zur Verwaltung des Inhaltes eines Wahlwiederholungsspeichers (WWS), der mehr als einen Speicherplatz aufweist, in dem jeweils Wahlinformationen (RN1 bis RNn), die an einem, an ein programmgesteuertes Kommunikationssystem (KS) angeschlossenen Endgerät (FE1) erzeugt werden, einspeicherbar sind und wobei die Inhalte der einzelnen Speicherplätze (W1 bis Wn) durch nachfolgend eingegebene Wahlinformationen ersetzbar sind und nach einer im Sinne der Betätigung einer Wahlwiederholungstaste erfolgenden wahlwiederholungsrelevanten Eingabeprozedur der Inhalt eines Speicherplatzes in der bestimmungsgemäß vorgegebenen Reihenfolge an der Anzeigeeinrichtung (DL) des Endgerätes (FE1) anzeigbar ist, wobei nach Ablauf einer vorbestimmten Selektionszeit die den jeweiligen Inhalt repräsentierende Wahlinformation automatisch ausgewählt wird,
**dadurch gekennzeichnet,**
**dass** durch programmtechnische Festlegungen auf Grund bestimmter Eingabeprozeduren eine gezielte Einflussnahme auf die bereits im Wahlwiederholungsspeicher gespeicherten bzw. abhängig von den bereits im Wahlwiederholungsspeicher gespeicherten Wahlinformationen (RN1...RNn) durchgeführt wird.

2. Verfahren nach Anspruch 1,
**dadurch gekennzeichnet,**
**dass** in den Fällen, in denen der durch eine vorgegebene Anzeigefolge oder durch eine vom betreffenden Teilnehmer vorgenommene selektive Bestimmung angezeigte Inhalt (RNₙ₋₂) eines Speicherplatzes (Wₙ₋₂) als Wahlinformation ausgewählt wurde, bei einer nachfolgenden wahlwiederholungsrelevanten Eingabeprozedur diese betreffende Wahlinformation als erste angezeigt wird und dass bei jeder unmittelbar nachfolgenden wahlwiederholungsrelevanten Eingabeprozedur die Inhalte der weiteren Speicherplätze jeweils in ihrer bestimmungsgemäß vorgegebenen Reihenfolge angezeigt werden.

3. Verfahren nach Anspruch 2,
**dadurch gekennzeichnet,**
**dass** der als Wahlinformation ausgewählte Inhalt eines Speicherplatzes (Wₙ₋₂) in den jeweils mit dem zeitrangjüngsten Eintrag (Wahlinformation) zu beschreibenden Speicherplatz (Wn) umgespeichert wird, dass bei der nachfolgenden wahlwiederholungsrelevanten Eingabeprozedur der Inhalt dieses Speicherplatzes angezeigt wird und nach Ablauf der Selektionszeit ausgewählt wird. (Fig. 2a)

4. Verfahren nach Anspruch 3,
**dadurch gekennzeichnet,**
**dass** im Zusammenhang mit der erfolgenden Umspeicherung die Inhalte der zeitrangjüngeren Speicherplätze (Wₙ₋₁,Wn) in Richtung des freiwerdenden Speicherplatzes (Wₙ₋₂) um jeweils einen Speicherplatz verschoben werden.

5. Verfahren nach Anspruch 2,
**dadurch gekennzeichnet,**
**dass** die aktuell in dem gezielt vom Teilnehmer durch eine entsprechende Handhabung adressierten Speicherplatz enthaltene und entsprechend angezeigte Wahlinformation durch eine während der Selektionszeit begonnene Einwahl einer Ziffernfolge ersetzbar ist, wobei die Selektionszeit abgebrochen wird.

6. Verfahren nach Anspruch 2,
**dadurch gekennzeichnet,**
**dass** eine innerhalb der Selektionszeit durch den Teilnehmer eingegebene Prozedursteuerinformation bewirkt, dass die auf Grund der wahlwiederholungsrelevanten Eingabeinformation (WWT) aktuell an der Anzeigeeinrichtung (DL) des jeweiligen Endgerätes (FE1) dargestellten Wahlinformation vor einem Überschreiben durch eine andere Wahlinformation so lange geschützt ist, bis die Eingabe einer diese Maßnahme aufhebenden weiteren Prozedursteuerinformation erfolgt ist.

7. Verfahren nach Anspruch 2,
**dadurch gekennzeichnet,**
**dass** eine eingespeicherte Wahlinformation, die durch die wahlwiederholungsrelevante Eingabeinformation des betreffenden Teilnehmers adressiert und an der Anzeigeeinrichtung (DL) des jeweiligen Endgerätes (FE1) dargestellt wird, mit der jeweils nach Ablauf der vorgegebenen Selektionszeit zusätzlich eingegebenen Wahlziffer bzw. Wahlziffernfolge zum neuen Speicherinhalt des betreffenden Speicherplatzes ergänzt wird, wobei die vollständige Wahlinformation ausgegeben wird.

8. Verfahren nach Anspruch 1,
**dadurch gekennzeichnet,**
**dass** der Wahlwiederholungsspeicher einschließlich der für die Durchführung der vorgesehenen Prozedurschritte notwendigen Steuermodule in dem an ein Kommunikationssystem angeschlossenen Endgerät realisiert ist.

9. Verfahren nach Anspruch 1,
**dadurch gekennzeichnet,**
**dass** der Wahlwiederholungsspeicher (WWS) einschließlich der für die Durchführung der vorgesehenen Prozedurschritte notwendigen Steuermodule im Systemspeicher (SPE) des Kommunikatitonssystem (KS) realisiert ist.

10. Verfahren nach Anspruch 9,
**dadurch gekennzeichnet,**
**dass** in den Fällen, in denen bei einem Kommunikationssystem im Zusammenhang mit einer auszuwählenden externen Wahlinformation eine von mehreren externen Leitungen oder Richtungen bestimmt wird, die zuletzt erfolgte Zuordnung bei einer erneuten Eingabe dieser Wahlinformation im Wahlwiederholungsspeicher (WWS) abgespeichert wird.

11. Verfahren nach Anspruch 9,
**dadurch gekennzeichnet,**
**dass** in den Fällen, in denen das jeweilige Fernsprechendgerät (FE1) an ein Kommunikationssystem angeschlossen ist, das eine Menüführung bietet, entsprechend der jeweils angezeigten Option durch Tastenbetätigung im Zusammenhang mit einer wahlwiederholungsrelevanten Eingabeinformation unterschiedliche und an der Anzeigeeinrichtung (DL) dargestellte leistungsmerkmalsspezifische Prozeduren einleitbar sind.

12. Verfahren nach Anspruch 11,
**dadurch gekennzeichnet,**
**dass** bei einer aus dem Wahlwiederholungsspeicher dargestellten Wahlinformation der Ablauf der daran geknüpften Selektionszeit durch Betätigung einer Funktionstaste unterbrochen wird, und dass anschließend unterschiedliche im Zusammenhang mit der jeweiligen Wahlinformation mögliche Optionen anzeigbar sind, wobei die jeweils gewünschte Option (Funktion) durch den Teilnehmer bestätigbar (OK) ist und somit aktiviert wird.

13. Verfahren nach Anspruch 2,
**dadurch gekennzeichnet,**
**dass** eine eingegebene Wahlinformation (ΔRNₙ₋₂) daraufhin geprüft wird, ob sie zumindest teilweise mit einer bereits abgespeicherten Wahlinformation (RNₙ₋₂) übereinstimmt und dass, sofern die aktuell eingegebene Wahlinformation (ΔRₙ₋₂) als Fragment einer gespeicherten Wahlinformation erkannt wird, diese in den jeweils mit dem jüngsten Eintrag zu beschreibenden Speicherplatz (Wn) umgespeichert wird, und dass die Inhalte der für die zeitrangjüngeren Einträge bestimmten Speicherplätze (Wₙ₋₁,Wn) in Richtung des frei werdenden Speicherplatzes jeweils um einen Speicherplatz verschoben werden (Figur 2c).

14. Verfahren nach Anspruch 2,
**dadurch gekennzeichnet,**
**dass** eine eingegebene Wahlinformation (RNₙ₋₂) daraufhin geprüft wird, ob sie zumindest teilweise mit einer bereits abgespeicherten Wahlinformation (ΔRNₙ₋₂) übereinstimmt, und dass sofern eine bereits abgespeicherte Wahlinformation als eine mit der anfänglichen Ziffernfolge übereinstimmendes Fragment der aktuell eingegebene Wahlinformation erkannt wird, diese gespeicherte Wahlinformation gelöscht und die aktuell eingegebene Wahlinformation in den jeweils für den jüngsten Eintrag zu beschreibenden Speicherplatz (Wnₙ₋₂) eingespeichert wird, und dass die in den zeitrangjüngeren Speicherplätzen enthaltenen Inhalte in Richtung des frei werdenden Speicherplatzes (W) um jeweils einen Speicherplatz verschoben werden. (Figur 2d)

15. Verfahren nach Anspruch 2,
**dadurch gekennzeichnet,**
**dass** eine eingegebene Wahlinformation daraufhin geprüft wird, ob sie zumindest teilweise mit einer bereits abgespeicherten Wahlinformation übereinstimmt und dass in den Fällen, in denen die aktuell eingegebene Wahlinformation als Fragment einer bereits abgespeicherten Wahlinformation erkannt wird, die in dem betreffenden Speicherplatz enthaltene Wahlinformation ungeändert weiterhin gespeichert bleibt, und dass in den Fällen, in denen die bereits abgespeicherte Wahlinformation als Fragment der aktuell eingegebenen Wahlinformation erkannt wird, das in dem betreffenden Speicherplatz enthaltene Wahlinformationsfragment durch die vollständigerere aktuell eingegebene Wahlinformation unter Beibehaltung des betreffenden Speicherplatzes ersetzt wird. (Indexgeführter Wahlwiederholungsspeicher)

16. Verfahren nach Anspruch 2,
**dadurch gekennzeichnet,**
**dass** bei einer eingegebenen Wahlinformation geprüft wird, ob eine bereits gespeicherte Wahlinformation mit dieser aktuell eingegebenen Wahlinformation übereinstimmt und dass, sofern dies zutrifft, eine Einspeicherung dieser Wahlinformation unterbleibt.

17. Anordnung mit einem Wahlwiederholungsspeicher (WWS), der mehr als einen Speicherplatz aufweist, so angeordnet, dass jeweils Wahlinformationen (RN1 bis RNn) an einem, an ein programmgesteuertes Kommunikationssystem (KS) angeschlossenen Endgerät (FE1) erzeugt werden und einspeicherbar sind und Mittel enthält, um die Inhalte der einzelnen Speicherplätze (W bis W) durch nachfolgend eingegebene Wahlinformationen zu ersetzen und weiterhin Mittel enthält, um nach einer im Sinne der Betätigung einer Wahlwiederholungstaste erfolgenden wahlwiederholungsrelevanten Eingabeprozedur den Inhalt eines Speicherplatzes in der bestimmungsgemäß vorgegebenen Reihenfolge an der Anzeigeeinrichtung (DL) des Endgerätes (FE) anzuzeigen, zur Durchführung aller Schritte des Verfahrens nach einem der vorhergehenden Ansprüche,
**dadurch gekennzeichnet,**
**dass** für die notwendigen Prozedurschritte Steuermodule eingesetzt sind, die Untermodule der Steuereinrichtung des Kommunikationssystems bzw. eines Endgerätes darstellen.

## Claims

1. Method for managing the content of a redial memory (WWS) which has more than one memory space, in which dialling information (RN1 to RNn), which is created on a terminal device (FE1) connected to a program-controlled communications system (KS), can be stored, and whereby the content of the individual memory spaces (W1 to Wn) can be replaced with successively entered dialling information, and, following a redial-related input procedure in the sense of the pressing of a redial key, the content of a memory space can be displayed in each case in the duly predefined order on the display device (DL) of the terminal device (FE1), whereby, at the end of a predefined selection time, the dialling information representing the relevant content is automatically selected,
**characterized in that**
a targeted influence is exerted on the dialling information already stored in the redial memory or depending on dialling information (RN1...RNn) already stored in the redial memory through program specifications on the basis of specific input procedures.

2. Method according to Claim 1,
**characterized in that**,
in cases where the content (RNₙ₋₂) of a memory space (Wₙ₋₂) displayed by a predefined display order or by a selective definition carried out by the subscriber concerned has been selected as dialling information, this dialling information is displayed as first information in the event of a subsequent redial-related input procedure, and, with each directly successive redial-related input procedure, the content of the further memory spaces is in each case displayed in its duly predefined order.

3. Method according to Claim 2,
**characterized in that**
the content of a memory space (Wₙ₋₂) selected as dialling information is transferred to the memory space (Wn) which is to be written in each case with the entry (dialling information) with the most recent chronological ordering, the content of this memory is displayed in the subsequent redial-related input procedure and is selected at the end of the selection time (Fig. 2a).

4. Method according to Claim 3,
**characterized in that**,
in connection with the effected storage transfer, the content of the memory spaces (Wₙ₋₁, Wn) with the more recent chronological ordering is shifted in each case by one memory space in the direction of the memory space (Wₙ₋₂) which becomes free.

5. Method according to Claim 2,
**characterized in that**
the dialling information currently contained in the memory space specifically addressed by the subscriber by means of a corresponding action and correspondingly displayed can be replaced by a dial-in of a sequence of digits which began during the selection time, whereby the selection time is interrupted.

6. Method according to Claim 2,
**characterized in that**
procedure control information entered by the subscriber within the selection time causes the dialling information currently displayed on the display device (DL) of the relevant terminal device (FE1) on the basis of the redial-related input information (WWT) to be protected from being overwritten by different dialling information until procedure control information which overrides this measure is entered.

7. Method according to Claim 2,
**characterized in that**
stored dialling information which is addressed by the redial-related input information of the subscriber concerned and is presented on the display device (DL) of the relevant terminal device (FE1) is supplemented with the dialling digit or dialling digit sequence entered in each case at the end of the predefined selection time to provide the new memory content of the memory space concerned, whereby the complete dialling information is output.

8. Method according to Claim 1,
**characterized in that**
the redial memory, including the control modules required in order to carry out the proposed procedure steps, is implemented in the terminal device connected to a communications system.

9. Method according to Claim 1,
**characterized in that**
the redial memory (WWS), including the control modules required in order to carry out the proposed procedure steps, is implemented in the system memory (SPE) of the communications system (KS).

10. Method according to Claim 9,
**characterized in that**,
in cases where one of a plurality of external lines or directions is defined in a communications system in connection with external dialling information which is to be selected, the last effected allocation is stored in the redial memory (WWS) if this dialling information is re-entered.

11. Method according to Claim 9,
**characterized in that**,
in cases where the relevant telephone terminal device (FE1) is connected to a communications system offering menu control, different service-feature-specific procedures, which are displayed on the display device (DL), can be initiated according to the respectively displayed option by key pressing in connection with redial-related input information.

12. Method according to Claim 11,
**characterized in that**,
in the case of dialling information presented from the redial memory, the elapsing of the selection time linked thereto is interrupted by pressing a function key, and different options available in connection with the relevant dialling information can then be displayed, whereby the respective required option (function) can be confirmed (OK) by the subscriber and is thus activated.

13. Method according to Claim 2,
**characterized in that**
entered dialling information (ΔRNₙ₋₂) is checked in order to determine whether it matches, at least partially, dialling information (RNₙ₋₂) already stored and, insofar as the currently entered dialling information (ΔRNₙ₋₂) is identified as a fragment of stored dialling information, said stored dialling information is transferred to the memory space (Wn) which is in each case to be written with the latest entry, and the content of the memory spaces (Wₙ₋₁, Wn) intended for the entries with the more recent chronological ordering is shifted in each case by one memory space in the direction of the memory space which becomes free (Figure 2c).

14. Method according to Claim 2,
**characterized in that** entered dialling information (RNₙ₋₂) is checked in order to determine whether it matches, at least partially, dialling information (ΔRNₙ₋₂) already stored and, insofar as dialling information already stored is identified as a fragment of the currently entered dialling information which matches the initial digit sequence, this stored dialling information is deleted and the currently entered dialling information is stored in the memory space (Wnₙ₋₂) which is in each case to be written for the most recent entry, and the content contained in the memory spaces with the more recent chronological ordering is shifted in each case by one memory space in the direction of the memory space (W) which becomes free (Figure 2d).

15. Method according to Claim 2,
**characterized in that**
entered dialling information is checked in order to determine whether it matches, at least partially, dialling information already stored, and, in cases where the currently entered dialling information is identified as a fragment of dialling information already stored, the dialling information contained in the memory space concerned remains stored unchanged, and in cases where the dialling information already stored is identified as a fragment of the currently entered dialling information, the dialling information fragment contained in the memory space concerned is replaced with the more complete, currently entered dialling information and the memory space concerned is retained (index-controlled redial memory).

16. Method according to Claim 2,
**characterized in that**,
when dialling information is entered, a check is carried out to determine whether dialling information already stored matches this currently entered dialling information, and, if so, this dialling information is not stored.

17. Arrangement with a redial memory (WWS), which has more than one memory space, arranged in such a way that dialling information (RN1 to RNn) is created and can be stored in each case on a terminal device (FE1) connected to a program-controlled communications system (KS), and which contains means to replace the content of the individual memory spaces (W₁ to Wₙ) with successively entered dialling information, and which furthermore contains means to display the content of a memory space in the duly predefined sequence on the display device (DL) of the terminal device (FE), following a redial-related input procedure in the sense of the pressing of a redial key, to carry out all steps of the method according to one of the preceding claims,
**characterized in that**
control modules representing sub-modules of the control device of the communications system or a terminal device are used for the necessary procedure steps.

## Revendications

1. Procédé de gestion du contenu d'une mémoire de répétition de numérotation (WWS) qui comporte plus d'un emplacement en mémoire et dans laquelle peuvent être enregistrées des informations de numérotation respectives (RN1 à RNn) qui sont produites sur un terminal (FE1) raccordé à un système de communication (KS) commandé par programme, les contenus des différents emplacements en mémoire (W1 à Wn) étant remplaçables par des informations de numérotation entrées successivement et, après une procédure d'entrée déterminante pour la répétition de numérotation et correspondant à l'actionnement d'une touche de répétition de numérotation, le contenu d'un emplacement en mémoire étant affichable dans l'ordre prédéfini sur le dispositif d'affichage (DL) du terminal (FE1), l'information de numérotation qui représente le contenu respectif étant automatiquement sélectionnée après l'expiration d'un temps de sélection prédéfini,
**caractérisé par le fait que**, par des spécifications techniques logicielles sur la base de certaines procédures d'entrée, une influence ciblée est exercée sur les informations de numérotation (RN1 à RNn) déjà mémorisées dans la mémoire de répétition de numérotation ou en fonction de celles-ci.

2. Procédé selon la revendication 1,
**caractérisé par le fait que**, dans les cas dans lesquels le contenu (RNₙ₋₂), affiché par une séquence d'affichage prédéterminée ou par une détermination sélective effectuée par l'abonné concerné, d'un emplacement en mémoire (Wₙ₋₂) a été sélectionné comme information de numérotation, cette information de numérotation concernée est affichée en premier lors d'une procédure d'entrée consécutive déterminante pour la répétition de numérotation et que, lors de chaque procédure d'entrée directement consécutive déterminante pour la répétition de numérotation, les contenus des autres emplacements en mémoire sont affichés à chaque fois dans leur ordre prédéfini.

3. Procédé selon la revendication 2,
**caractérisé par le fait que** le contenu, sélectionné comme information de numérotation, d'un emplacement en mémoire (Wₙ₋₂) est transféré dans l'emplacement en mémoire (Wn) à remplir respectivement avec l'enregistrement (information de numérotation) chronologiquement le plus récent, que le contenu de cet emplacement en mémoire est affiché lors de la procédure d'entrée consécutive déterminante pour la répétition de numérotation et qu'il est sélectionné après l'expiration du temps de sélection. (Figure 2a)

4. Procédé selon la revendication 3,
**caractérisé par le fait que**, en relation avec ledit transfert, les contenus des emplacements en mémoire chronologiquement plus récents (Wₙ₋₁, Wn) sont décalés à chaque fois d'un emplacement en mémoire en direction de l'emplacement en mémoire (Wₙ₋₂) qui se libère.

5. Procédé selon la revendication 2,
**caractérisé par le fait que** l'information de numérotation qui est actuellement contenue dans l'emplacement en mémoire adressé de manière ciblée par l'abonné au moyen d'une manipulation correspondante et qui est affichée en conséquence est remplaçable par une numérotation directe, commencée pendant le temps de sélection, d'une suite de chiffres, le temps de sélection étant interrompu.

6. Procédé selon la revendication 2,
**caractérisé par le fait qu'**une information de commande de procédure entrée par l'abonné pendant le temps de sélection fait que l'information de numérotation présentée actuellement sur le dispositif d'affichage (DL) du terminal respectif (FE1) sur la base de l'information d'entrée (WWT) déterminante pour la répétition de numérotation est protégée contre un écrasement par l'écriture d'une autre information de numérotation jusqu'à ce que l'entrée d'une autre information de commande de procédure annulant cette disposition soit effectuée.

7. Procédé selon la revendication 2,
**caractérisé par le fait qu'**une information de numérotation mémorisée qui est adressée par l'information d'entrée, déterminante pour la répétition de numérotation, de l'abonné concerné et qui est présentée sur le dispositif d'affichage (DL) du terminal respectif (FE1) est complétée par le chiffre numéroté ou la suite de chiffres numérotés qui sont entrés en plus à chaque fois après l'expiration du temps de sélection prédéfini pour donner un nouveau contenu de l'emplacement en mémoire concerné, l'information de numérotation complète étant délivrée en sortie.

8. Procédé selon la revendication 1,
**caractérisé par le fait que** la mémoire de répétition de numérotation, y compris les modules de commande nécessaires à la mise en oeuvre des étapes de procédure prévues, est réalisée dans le terminal raccordé au système de communication.

9. Procédé selon la revendication 1,
**caractérisé par le fait que** la mémoire de répétition de numérotation (WWS), y compris les modules de commande nécessaires à la mise en oeuvre des étapes de procédure prévues, est réalisée dans la mémoire de système (SPE) du système de communication (KS).

10. Procédé selon la revendication 9,
**caractérisé par le fait que**, dans les cas dans lesquels une ligne ou direction parmi plusieurs lignes ou directions externes est déterminée dans un système de communication en relation avec une information de numérotation externe à sélectionner, la dernière association effectuée est mémorisée lors d'une nouvelle entrée de cette information de numérotation dans la mémoire de répétition de numérotation (WWS).

11. Procédé selon la revendication 9,
**caractérisé par le fait que**, dans les cas dans lesquels le terminal téléphonique respectif (FE1) est raccordé à un système de communication qui offre une commande par menu, différentes procédures spécifiques aux services et présentées sur le dispositif d'affichage (DL) sont déclenchables en fonction de l'option respectivement affichée, par l'actionnement de touches, en relation avec une information d'entrée déterminante pour la répétition de numérotation.

12. Procédé selon la revendication 11,
**caractérisé par le fait que**, pour une information de numérotation présentée à partir de la mémoire de répétition de numérotation, l'écoulement du temps de sélection lié à cette opération est interrompu par l'actionnement d'une touche de fonction et que différentes options possibles en relation avec l'information de numérotation respective sont ensuite affichables, l'option (fonction) respectivement souhaitée pouvant être confirmée (OK) par l'abonné et ainsi activée.

13. Procédé selon la revendication 2,
**caractérisé par le fait qu'**une information de numérotation entrée (ΔRNₙ₋₂) est vérifiée pour savoir si elle coïncide au moins en partie avec une information de numérotation (RNₙ₋₂) déjà mémorisée et que, dans la mesure où l'information de numérotation actuellement entrée (ΔRNₙ₋₂) est reconnue comme étant un fragment d'une information de numérotation mémorisée, celle-ci est transférée dans l'emplacement en mémoire (Wn) à remplir respectivement avec l'enregistrement le plus récent et que les contenus des emplacements en mémoire (Wₙ₋₁, Wn) déterminés pour les enregistrements chronologiquement plus récents sont décalés à chaque fois d'un emplacement en mémoire en direction de l'emplacement en mémoire qui se libère. (Figure 2c)

14. Procédé selon la revendication 2,
**caractérisé par le fait qu'**une information de numérotation entrée (RNₙ₋₂) est vérifiée pour savoir si elle coïncide au moins en partie avec une information de numérotation déjà mémorisée (ΔRNₙ₋₂) et que, dans la mesure où une information de numérotation déjà mémorisée est reconnue comme étant un fragment, coïncidant avec la suite de chiffres initiale, de l'information de numérotation actuellement entrée, cette information de numérotation mémorisée est effacée et l'information de numérotation actuellement entrée est mémorisée dans l'emplacement en mémoire (Wnₙ₋₂) à remplir respectivement pour l'enregistrement le plus récent et que les contenus des emplacements en mémoire chronologiquement plus récents sont décalés à chaque fois d'un emplacement en mémoire en direction de l'emplacement en mémoire qui se libère (W). (Figure 2d)

15. Procédé selon la revendication 2,
**caractérisé par le fait qu'**une information de numérotation entrée est vérifiée pour savoir si elle coïncide au moins en partie avec une information de numérotation déjà mémorisée et que, dans les cas dans lesquels l'information de numérotation actuellement entrée est reconnue comme étant un fragment d'une information de numérotation déjà mémorisée, l'information de numérotation contenue dans l'emplacement en mémoire concerné reste mémorisée sans être changée et que, dans les cas dans lesquels l'information de numérotation déjà mémorisée est reconnue comme étant un fragment de l'information de numérotation actuellement entrée, le fragment d'information de numérotation contenu dans l'emplacement en mémoire concerné est remplacé par l'information de numérotation plus complète actuellement entrée en conservant l'emplacement en mémoire concerné. (Mémoire de répétition de numérotation gérée par index)

16. Procédé selon la revendication 2,
**caractérisé par le fait que**, en présence d'une information de numérotation entrée, on vérifie si une information de numérotation déjà mémorisée coïncide avec cette information de numérotation actuellement entrée et que, dans la mesure où c'est le cas, on n'effectue pas de mémorisation de cette information de numérotation.

17. Dispositif avec une mémoire de répétition de numérotation (WWS) qui comporte plus d'un emplacement en mémoire, tel que des informations de numérotation (RN1 à RNn) sont produites à chaque fois sur un terminal (FE1) raccordé à un système de communication (KS) commandé par programme et sont mémorisables, qui contient des moyens pour remplacer les contenus des différents emplacements en mémoire (W à W) par des informations de numérotation entrées successivement et qui contient aussi des moyens pour, après une procédure d'entrée déterminante pour la répétition de numérotation et correspondant à l'actionnement d'une touche de répétition de numérotation, afficher sur le dispositif d'affichage (DL) du terminal (FE) le contenu d'un emplacement en mémoire dans l'ordre prédéfini, en vue de la mise en oeuvre de toutes les étapes du procédé selon l'une des revendications précédentes,
**caractérisé par le fait qu'**on utilise pour les étapes de procédure nécessaires des modules de commande qui représentent des sous-modules du dispositif de commande du système de communication ou d'un terminal.
